# EUROPEAN PATENT APPLICATION

(11) **EP 3 255 583 A1**
(43) Date of publication of application: **13.12.2017**
(21) Application number: 17172214.3
(22) Date of filing: 22.05.2017
(51) Int. Cl.: G06K 9/00

(54) **METHOD OF AUTOMATED TUBERCULOSIS EXAMINATION OF A SPUTUM SMEAR IMAGE**

(30) Priority: 08.06.2016 KR 20160070650
(71) Applicant: Inspace Co., Ltd., Daejeon (KR)
(72) Inventor: CHOI, Myung Jin, Yuseong-gu, Daejeon, 34195 (KR); KIM, Tae Young, Daejeon, 34048 (KR); KIM, Moon Gi, Daejeon, 35284 (KR); PARK, Hyun Woo, Yuseong-gu, Daejeon, 34107 (KR)
(74) Representative: TBK

(57) **Abstract**

Disclosed is a method of conducting a tuberculosis examination. The method includes a specimen image storage step of storing a sputum smear image photographed using a microscope, a specimen feature data extraction step of extracting feature data from the stored sputum smear image, a prelearned model adoption classification step of performing learning using an artificial neural network using a sample image in which the presence or the absence of tuberculosis bacilli is known in advance, and a step of displaying whether or not a specimen has tuberculosis by inputting the extracted feature data of the specimen into a pre-learned model to identify whether or not the specimen has tuberculosis.

## Description

### BACKGROUND OF THE INVENTION

### 1. Field of the Invention

The present invention relates to a method of conducting a tuberculosis examination and, more particularly, to a method of conducting a tuberculosis examination capable of reducing examination error using automation.

### 2. Description of the Related Art

The number of tuberculosis patients is growing steadily despite improvements in living conditions and medical treatment. According to World Health Organization (WHO) data, the number of tuberculosis patients was 9 million in 2013, of whom 1.5 million died. The number of tuberculosis patients is increasing again in Korea, making Korea the worst case among OECD countries.

Examples of methods of diagnosing tuberculosis include sputum smear examination, sputum culture examination, drug susceptibility examination, chest radiography, and tuberculin skin test (TST).

Among the examples, the sputum smear examination and cultivation are the most widely used. The sputum smear examination is particularly crucial, and is considered a very important examination in the public health center.

The sputum smear examination is an examination method for confirming the presence of tuberculosis bacilli using a microscope, and the method includes applying and spreading sputum from the patient on a slide to form a thin layer and then dyeing the sputum so as to confirm the discharge of tuberculosis bacilli.

Such a sputum smear examination is generally used due to a relatively simple experimental operation and identification of the results in a short period of time. However, since the accuracy of the examination results may depend on the proficiency level of an examiner, it is difficult to identify the presence or absence of tuberculosis and to predict treatment progress.

In addition, since the sputum smear examination is a method of individually checking for tuberculosis with the naked eye, there is a problem in that the examiner may suffer from eye strain.

### SUMMARY OF THE INVENTION

Accordingly, the present invention has been made keeping in mind the above problems occurring in the related art, and an object of the present invention is to provide a method of conducting a tuberculosis examination which can detect tuberculosis bacilli quickly and conveniently using a simple operation by automating a sputum smear examination.

Another object of the present invention is to provide a method of conducting a tuberculosis examination which can reduce an examination error depending on the proficiency level of an examiner since the examiner does not need to perform manual observation using a microscope.

In order to accomplish the above objects, the present invention provides a method of conducting a tuberculosis examination, the method including a specimen image storage step of storing a sputum smear image photographed using a microscope, a specimen feature data extraction step of extracting feature data from the stored sputum smear image, a prelearned model adoption classification step of performing learning using an artificial neural network using a sample image in which the presence or the absence of tuberculosis bacilli is known in advance, and a step of displaying whether or not a specimen has tuberculosis by inputting the extracted feature data of the specimen into a pre-learned model to identify whether or not the specimen has tuberculosis.

The specimen feature data extraction step may include converting a stored specimen image into a binarized image, segmenting all objects in the converted binarized image, forming a patch image using the segmented objects, and extracting the feature data from the formed patch image.

The extracting the feature data from the formed patch image may include detecting an outer line from the inputted patch image, extracting feature descriptors through a Fourier feature, a Hu moment, and a histogram of oriented gradients (HOG) using information on the detected outer line, combining the extracted feature descriptors to form a final feature descriptor, and storing the formed final feature descriptor in a one-dimensional vector form.

The prelearned model adoption classification step may include converting the sample image into a binarized image, segmenting all objects in the converted binarized image, storing information on the presence or the absence of the tuberculosis bacilli using a predetermined label, forming a patch image using the segmented objects and storing the patch image, extracting the feature data using the formed patch image, and learning the artificial neural network using the extracted feature data and label data.

The step of displaying whether or not the specimen has tuberculosis may include inputting the extracted feature data of the specimen into the pre-learned model to identify whether or not the specimen has tuberculosis, judging the specimen to have tuberculosis when at least one object identified as a tuberculosis bacillus is detected in a specimen image and outputting the judgment result, and judging the specimen to not be infected with tuberculosis when no object identified as a tuberculosis bacillus is detected in the specimen image and outputting the judgment result.

According to this characteristic, in the present invention, tuberculosis bacilli may be detected quickly and conveniently even by a person who is not a skilled expert using a simple operation by automating a sputum smear examination.

Further, in the present invention, an automatic examination method having improved sensitivity and specificity is provided to thus reduce an examination error depending on the proficiency level of an examiner.

### BRIEF DESCRIPTION OF THE DRAWINGS

The above and other objects, features and advantages of the present invention will be more clearly understood from the following detailed description taken in conjunction with the accompanying drawings, in which:
FIG. 1 is a flowchart showing a method of conducting a tuberculosis examination according to an embodiment of the present invention;
FIG. 2 is a flowchart showing the extraction of feature data from a specimen image according to the embodiment of the present invention;
FIG. 3 is a flowchart accurately showing the extraction of the feature data according to the embodiment of the present invention;
FIG. 4 is a flowchart showing an artificial neural network learning process using a sample image according to the embodiment of the present invention; and
FIG. 5 is a flowchart showing the identification of tuberculosis according to the embodiment of the present invention.

### DESCRIPTION OF THE PREFERRED EMBODIMENTS

The present invention will be described more fully hereinafter with reference to the accompanying drawings, in which embodiments of the invention are shown so as to enable easy understanding by a person with ordinary skill in the art. The present invention may, however, be embodied in many different forms, and should not be construed as being limited to the embodiments set forth herein. In order to clearly illustrate the present invention, parts not related to the description are omitted from the drawings, and like parts are denoted by similar reference numerals throughout the specification.

A method of conducting a tuberculosis examination according to an embodiment of the present invention will be then described with reference to the drawings.

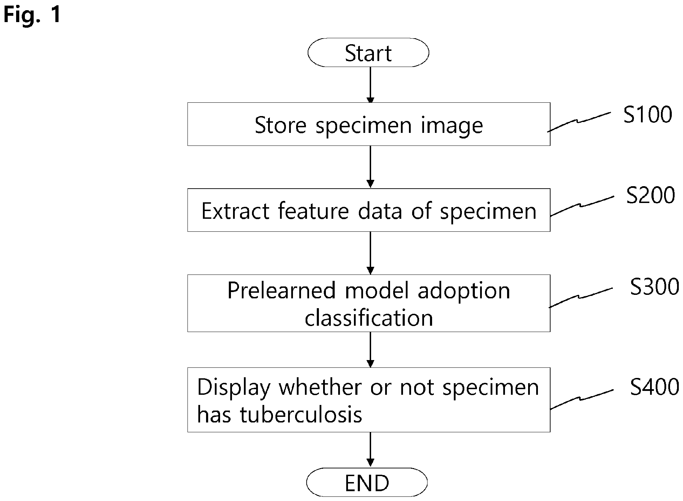

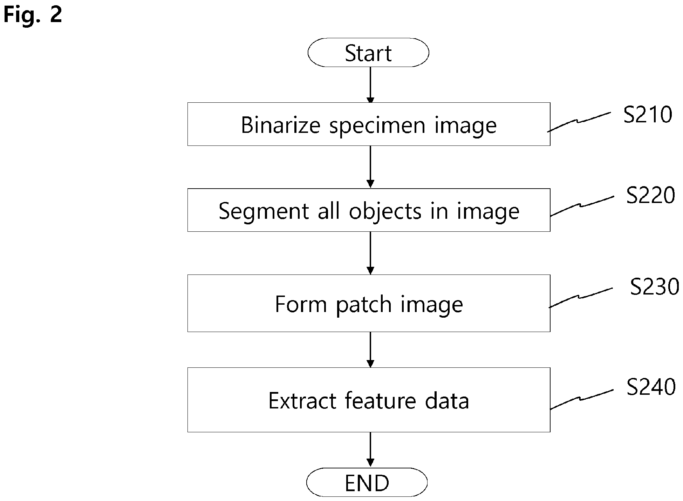

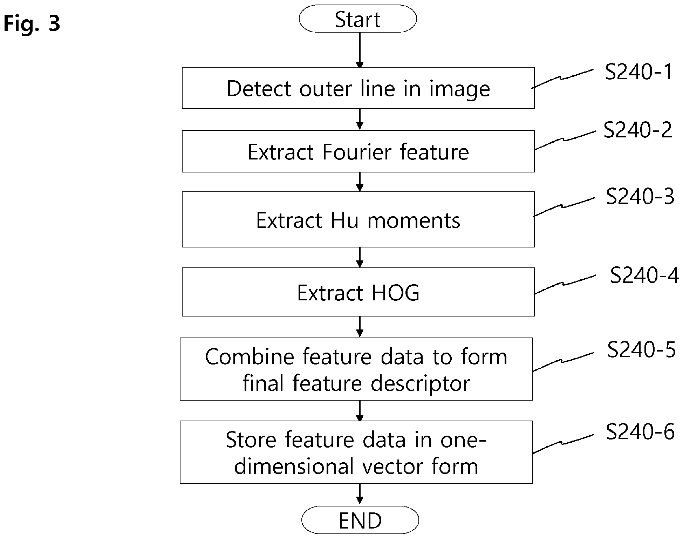

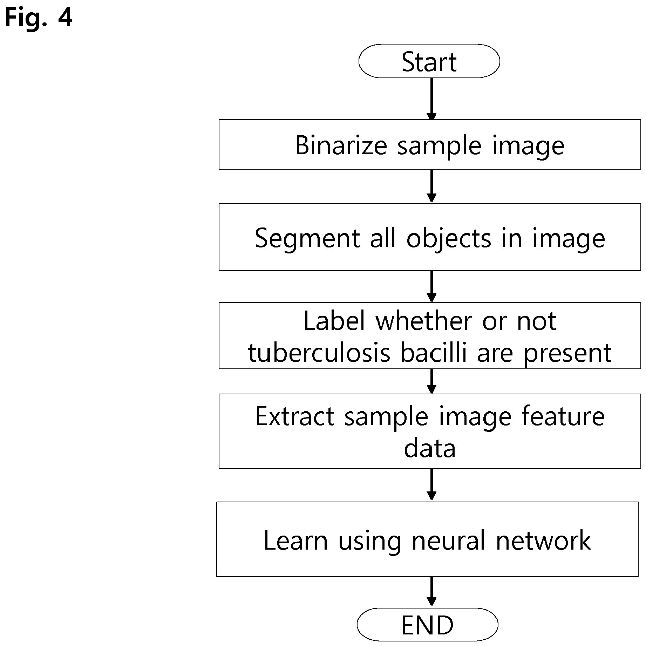

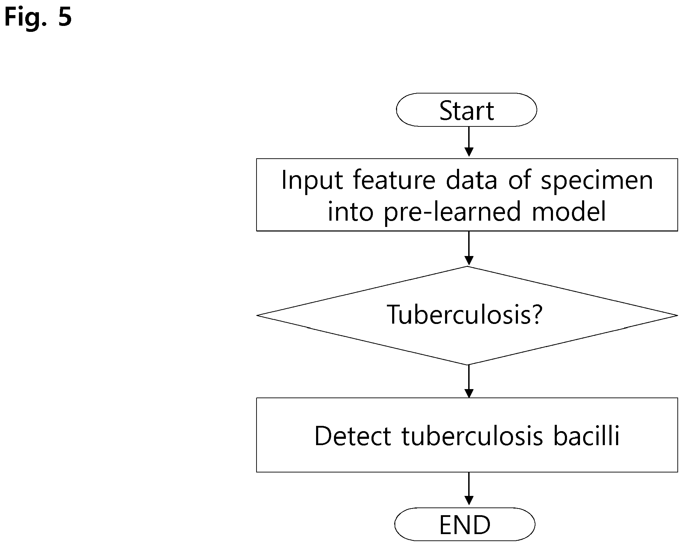

FIG. 1 is a flowchart showing a method of conducting a tuberculosis examination according to an embodiment of the present invention. FIG. 2 is a flowchart showing the extraction of feature data from a specimen image according to the embodiment of the present invention. FIG. 3 is a flowchart accurately showing the extraction of the feature data according to the embodiment of the present invention. FIG. 4 is a flowchart showing an artificial neural network learning process using a sample image according to the embodiment of the present invention. FIG. 5 is a flowchart showing the identification of tuberculosis according to the embodiment of the present invention.

Referring to FIGS. 1 to 5, a method of conducting a tuberculosis examination according to the embodiment of the present invention may include a specimen image storage step (S100), a specimen feature data extraction step (S200), a prelearned model adoption classification step (S300), and a step of displaying whether or not the specimen has tuberculosis (S400).

A sputum smear image photographed using a microscope may be obtained and stored during the specimen image storage step (S100).

The specimen feature data extraction step (S200) is a step of extracting features in order to judge whether or not tuberculosis is present in the stored specimen image. As shown in FIG. 2, the specimen image stored in advance may be converted into a binarized image, including two pixel values of black (0) and white (255), through a step of binarizing the specimen image (S210).

Next, all objects (regions treated with a white color) in the binarized image that is obtained are segmented (S220).

Next, the segmented object is formed and stored as a patch image having a fixed size (32 x 32) (S230).

Next, a feature descriptor is extracted from the formed patch image during a feature data extraction process (S240).

As shown in FIG. 3, an outer line is first detected from the inputted patch image in order to extract the feature data (S240-1). Since the morphological features of tuberculosis bacilli are used, the feature data are extracted using the outer line.

Subsequently, a Fourier feature is extracted using extracted information on the outer line (S240-2). In the Fourier feature, Fourier coefficients are defined by Fourier descriptors. The basic form of the object may be decided using some coefficients of a first portion, that is, a low-frequency region, and the forms may be roughly differentiated using only several coefficients.

Subsequently, a Hu moment value is extracted as another feature capable of expressing the forms (S240-3). The Hu moment is suitable for distinguishing the outer line forms of tuberculosis bacilli which have invariant features in image size conversion, rotation, and reflection by linearly combining different normalized moments.

Subsequently, HOG (histogram of oriented gradients) features are extracted (S240-4). The HOG is a feature descriptor that indicates a shape histogram based on an edge direction distribution of the object. The HOG is based on the principle whereby an image is divided into cells each having a small region and a direction (gradient) of an edge pixel of each cell is used. A directional component of each cell is represented by a histogram, and a one-dimensional vector, in which all histograms are connected in a line, is used as the value of the feature descriptor. Since the HOG is based on the principle of using the direction of the edge, it is easy to detect the inherent contour of tuberculosis bacilli.

Subsequently, when the feature descriptor value is extracted, the feature data are combined to form a final feature descriptor (S240-5).

In the present invention, as the feature descriptor, Fourier features, Hu moments, and HOGs (histogram of oriented gradient), which may express morphological features of the object, are used in combination. A plurality of combined descriptors may be used instead of a single descriptor to thus complement the shortcomings of the descriptors, which may reduce errors in the classification of tuberculosis bacilli.

Finally, the formed feature descriptor is stored in a one-dimensional vector form (S240-6).

The prelearned model adoption classification step (S300) is a learning process performed by an artificial neural network. As shown in FIG. 4, the sample image in which the presence or absence of tuberculosis bacilli is known in advance is subjected to a step of binarizing the sample image, thereby being converted into a binarized image, in which a region recognized as an object has a white value and a region recognized as a background has a black value (S310).

Next, all objects in the binarized image that is obtained are segmented (S320).

Next, information on the presence or absence of tuberculosis bacilli are stored together using a predetermined label (S330).

For example, when the tuberculosis bacilli are not '01' tuberculosis bacilli, they are labeled with a value of '10'.

Next, the segmented object is formed and stored as a patch image having a fixed size (32 x 32). The feature data, such as Fourier features, Hu moments, and HOGs (histogram of oriented gradients), are extracted in a one-dimensional integer vector form using the formed patch image during the feature data extraction process (S340).

Finally, the artificial neural network is learned using the extracted feature data and label data (S350).

In the step of displaying whether or not the specimen has tuberculosis (S400), the sputum smear image of the specimen that is photographed during the process of identifying tuberculosis bacilli from the specimen is segmented and the patch image is formed, thus extracting the feature data.

First, as shown in FIG. 5, the feature data of the extracted specimen are inputted into the pre-learned model (S410) to identify whether or not the specimen has tuberculosis (S420).

Next, as a result of the identification, when at least one object identified as a tuberculosis bacillus is detected in the specimen image, the specimen is finally judged to have tuberculosis and the judgment result is outputted. When no object identified as a tuberculosis bacillus is detected in the specimen image, the specimen is judged to not be infected with tuberculosis and it is outputted that the specimen does not have tuberculosis (S430).

In the method of conducting a tuberculosis examination according to the present invention, tuberculosis bacilli can be detected quickly and conveniently even by a person who is not a skilled expert, and examination error can be remarkably reduced.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A method of conducting a tuberculosis examination, the method comprising:
a specimen image storage step of storing a sputum smear image photographed using a microscope;
a specimen feature data extraction step of extracting feature data from the stored sputum smear image;
a prelearned model adoption classification step of performing learning using an artificial neural network using a sample image in which a presence or an absence of tuberculosis bacilli is known in advance; and
a step of displaying whether or not a specimen has tuberculosis by inputting the extracted feature data of the specimen into a pre-learned model to identify whether or not the specimen has the tuberculosis.

2. The method of claim 1, wherein the specimen feature data extraction step includes
converting a stored specimen image into a binarized image;
segmenting all objects in the converted binarized image;
forming a patch image using the segmented objects; and
extracting the feature data from the formed patch image.

3. The method of claim 2, wherein the extracting the feature data from the formed patch image includes
detecting an outer line from the inputted patch image;
extracting feature descriptors through a Fourier feature, a Hu moment, and a histogram of oriented gradients (HOG) using information on the detected outer line;
combining the extracted feature descriptors to form a final feature descriptor; and
storing the formed final feature descriptor in a one-dimensional vector form.

4. The method of claim 1, wherein the prelearned model adoption classification step includes
converting the sample image into a binarized image;
segmenting all objects in the converted binarized image;
storing information on the presence or the absence of the tuberculosis bacilli using a predetermined label;
forming a patch image using the segmented objects and storing the patch image;
extracting the feature data using the formed patch image; and
learning the artificial neural network using the extracted feature data and label data.

5. The method of claim 1, wherein the step of displaying whether or not the specimen has the tuberculosis includes
inputting the extracted feature data of the specimen into the pre-learned model to identify whether or not the specimen has the tuberculosis;
judging the specimen to have the tuberculosis when at least one object identified as a tuberculosis bacillus is detected in a specimen image and outputting a judgment result; and
judging the specimen to not be infected with tuberculosis when no object identified as the tuberculosis bacillus is detected in the specimen image and outputting a judgment result.
